# EUROPEAN PATENT SPECIFICATION

(11) **EP 1 575 810 B1**
(45) Date of publication and mention of the grant of the patent: **09.05.2007**
(21) Application number: 02796802.3
(22) Date of filing: 20.12.2002
(51) Int. Cl.: B60R 21/16

(54) **AIRBAG COMPRISING A VARIABLE-SURFACE VENTILATION AREA**
AIRBAG MIT BELÜFTUNGSBEREICH MIT VARIABLER VENTILATIONSÖFFNUNG
AIRBAG A ZONE DE VENTILATION A SURFACE VARIABLE

(43) Date of publication of application: 21.09.2005
(73) Proprietor: Dalphi Metal Espana, S.A., 28006 Madrid (ES)
(72) Inventor: MORENO VINUESA, Daniel, E-28042 Madrid (ES); VILA ESTEVEZ, Gustavo, E-28042 Madrid (ES); LOIS MARTINEZ, Carlos, E-28042 Madrid (ES)
(74) Representative: Elzaburu Marquez, Alberto
(86) International application number: PCT/ES2002/000611
(87) International publication number: WO 2004/056618

(56) References cited:
- EP-A1- 0 423 981
- WO-A1-90/09908
- US-A- 5 803 121
- US-A- 5 931 497
- US-A- 6 139 048
- US-A1- 3 573 885

## Description

### FIELD OF THE INVENTION

The present invention refers to airbags used in automobiles to cushion the blows suffered by drivers and passengers in the case of crashes or collisions, and more specifically to an airbag with a variable-surface ventilation area allowing the gas discharge flow to adapt to the impact and/or occupant needs.

### BACKGROUND OF THE INVENTION

Airbags consist in casings in which a folded bag is fixed which inflates rapidly by means of a gas produced by a generator when certain sensing devices detect a collision of the vehicle. The bag is thus deployed up in front of the driver or passenger, depending on its location, and prevents their bodies from hitting against any part of the vehicle.

When an airbag is activated the main function is that of holding back the occupant by exerting a force against him or her, producing a deceleration. The airbag must keep a certain degree of pressure during collision with the occupant, and this pressure must be comprised between certain limits allowing compliance with biomechanical parameters assuring the integrity of the occupants, because otherwise they may hit against an excessively hard surface and bounce backwards, or against an excessively soft surface and hit against the vehicle.

The pressure in the bag depends on the amount of gas held inside it. Since the generator releases all the gas once the airbag system is activated the only way to control the amount of gas in the bag is during release.

Different proposals in this sense are known such as:
- The use of more or less permeable fabrics for the bag of the airbag.
- The demarcation of outlet areas by means of seams which break when a specific pressure or temperature is reached, leaving an area free for discharging the gases.
- The incorporation of venting openings for discharging the gas, in some cases provided with different means of sealing the opening to achieve a better control of the internal pressure in the bag than that provided by the variation of the size of the opening, for example. Fabrics burning at a specific temperature or resilient membranes breaking at a specific pressure can be mentioned among these means. An airbag according to the preamble of claim 1 is known from EP-A-423981.

However, the mentioned proposals do not solve the problem of adequately controlling the gas pressure inside the bag, since once the ventilation opening is open, it offers a constant gas release surface, so that if the pressure increases, there is nothing to dampen that increase, and also when pressure starts to decrease it does so in a very abrupt manner. The performance of the bag is in turn the same for any kind of impact and/or occupant.

It would be thus desirable to have an airbag including means allowing the pressure inside the bag to adapt to the impact and/or the occupant needs, in an improved manner.

### SUMMARY OF THE INVENTION

According to the invention, the airbag, provided with a gas discharge opening, is provided with a ventilation area formed by an element fixed to the inflatable bag contiguous to said opening configured so that it allows the gas outlet surface to be variable during an impact, in a directly proportional ratio regarding the pressure existing inside the bag.

This element forming the ventilation area is formed by two annular shaped parts that are flexible enough to have different gas outlet surfaces and includes a sealing membrane for the gas discharge opening.

Said parts will graduate the gas outlet, once the sealing membrane is broken, if the case may be, depending on the force exerted inside the bag.

The main advantage of the invention is that it achieves that the pressure inside the bag of the airbag adapts to the occupant, the impact or both.

Other features and advantages of the present invention will be inferred from the following detailed description of an illustrating and by no means non-limiting embodiment of its object based on the attached drawings.

### DESCRIPTION OF THE DRAWINGS

Figure 1 shows a plan view of the three parts used in the illustrative embodiment of the invention.
Figures 2a and 2b schematically show the configuration of the element forming the ventilation area according to the invention and Figures 3a and 3b show its application on an opening provided in the bag of the airbag.
Figures 4a, 4b and 4c show schematic illustrations of the ventilation area operation according to the invention.

### DETAILED DESCRIPTION OF THE INVENTION

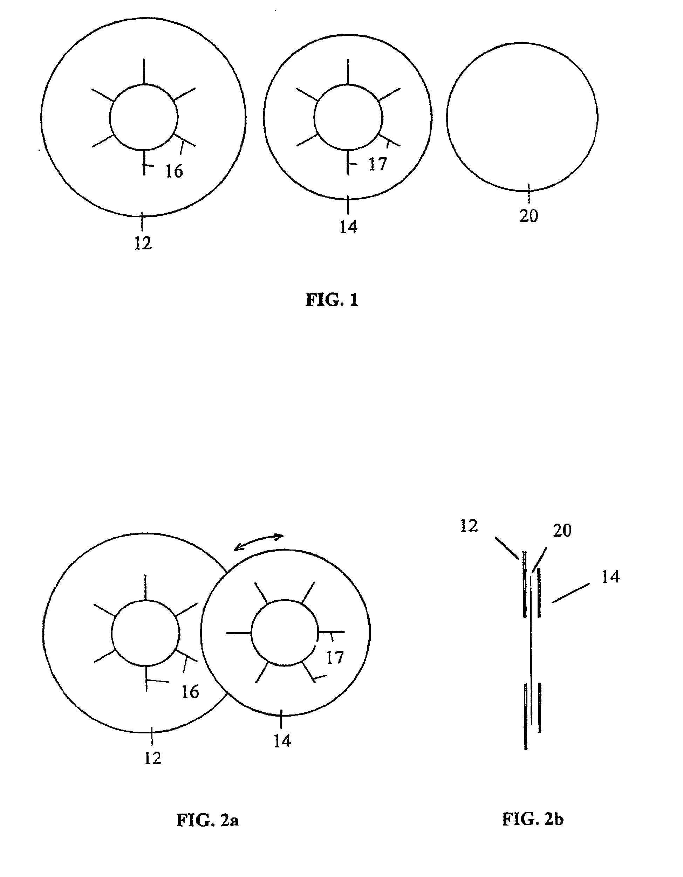

Figure 1 shows the three parts making up the forming element 10 of the ventilation area of the bag of the airbag according to the embodiment of the invention described below: two annulus shaped parts 12, 14 with inner radial cuts 16, 17 and a sealing membrane 20.

The annulus shaped parts 12, 14 are made in polyamide fabric with a thick fresh silicone coating, and the membrane 20 is made with a silicone sheet.

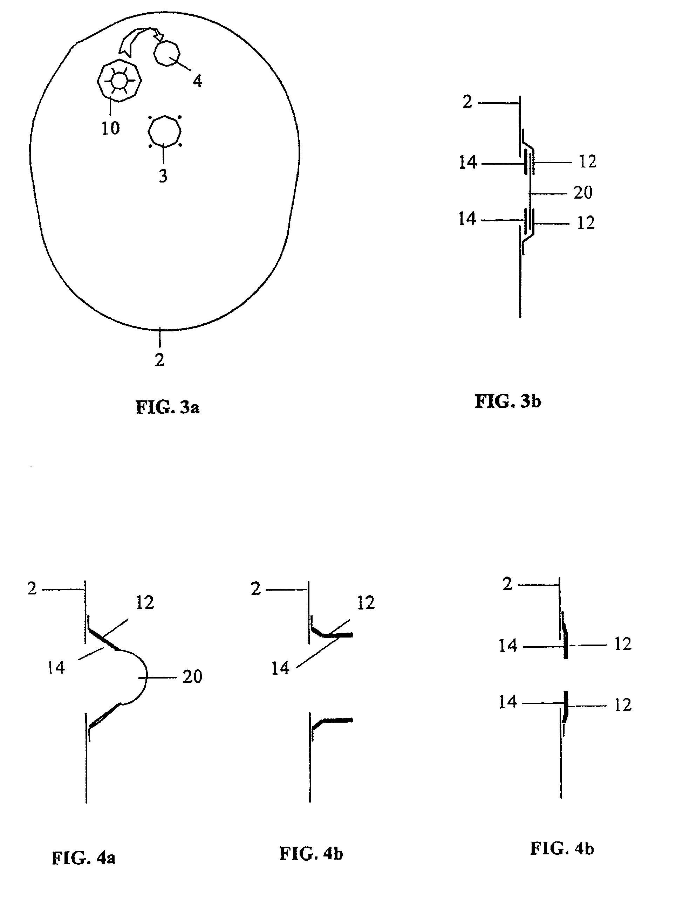

As shown in figures 2a and 2b, membrane 20 is placed between parts 12 and 14, on their fresh silicone coated sides to achieve adhesion thereof. Once the element 10 is formed, and as shown in Figures 3a and 3b, the element 10, formed by annulus shaped parts 12 and 14 and the membrane 20, is fixed to the bag 2 above the opening 4, the areas with radial cuts 16, 17 being located approximately on top of the opening 4, which is in turn sealed by the membrane 20.

When the bag is full of gas after airbag activation due to a collision, the occupant collides against it producing an excess pressure causing expansion of the membrane 20, as shown in Figure 4a, until it finally breaks. This opening in the ventilation area makes the pressure drop, but the thrust exerted by the occupant is still there, so the pressure increases again. That is when parts 12 and 14 at, becoming strained so that the ventilation area becomes larger, as shown in Figure 4b, allowing the outlet of more gas and preventing pressure from reaching levels above those allowed. When the pressure starts to decrease, and as shown in Figure 4c, parts 12 and 14 retract preventing the pressure drop from being very abrupt. Maintaining optimal pressure in the bag for more time is thus achieved, thereby achieving good occupant retention.

The use of a single part or two parts 12, 14 as the element forming the ventilation area together with the sealing membrane depends, on one hand, on the degree of rigidity desired. On the other hand, the use of two parts 12, 14 allows achieving different performances of the ventilation area according to its inner or outer diameters and the coinciding or different position of the circular cuts 16, 17.

The performance of the ventilation area may also vary by changing the width of the cuts or scores 16, 17.

With regard to the described embodiments of the invention, those modifications comprised within the scope defined by the following claims may be included.

## Claims

1. An airbag the inflatable bag (2) of which has a gas discharge opening (4) and a ventilation area formed by an element (10) fixed to the area of the inflatable bag (2) next to said opening (4), configured so that it allows the gas outlet surface to be variable during an impact in a directly proportional ratio regarding the pressure existing inside the bag **characterized in that** the element (10) forming the ventilation area is formed by two annulus shaped parts (12, 14) with radial cuts (16, 17) in the area intended for partially covering the opening (4) and a sealing membrane (20) of said opening (4) located between them.

2. - An airbag according to claim 1, **characterised in that** said parts (12, 14) are made with polyamide fabric with a thick silicone coating on the face intended for being in contact with a sealing membrane (20) formed by a silicone sheet.

3. - An airbag according to claim 1, **characterised in that** the sealing membrane of the opening (4) is intended for breaking when the inner pressure of the bag (2) reaches a predetermined magnitude.

## Patentansprüche

1. Airbag, dessen aufblasbarer Sack (2) eine Gasauslassöffnung (4) und einen Entlüftungsbereich enthält, der durch ein auf dem Bereich des aufblasbaren Sackes (2) angrenzend an die Öffnung (4) befestigtes Element (10) ausgebildet wird der so konfiguriert ist, dass er es ermöglicht, dass die Gasauslassfläche während eines Äufpralls in einem direkt proportionalen Verhältnis bezüglich des innerhalb des Sackes vorhandenen Druckes variabel ist, **dadurch gekennzeichnet, dass** das den Entlüftungsbereich ausbildende Elemert (10) durch zwei ringförmige Teile (12, 14) mit radialen Einschnitten (16, 17) in dem für eine teilweise Überdeckung der Öffnung (4) gedachten Bereich und eine zwischen diesen befindliche Dichtungsmemoran (20) der Öffnung (4) gebildet wird.

2. Airbag nach Anspruch 1, **dadurch gekennzeichnet, dass** die Teile (12, 14) mit einem Polyamidgewebe mit einer dicken Silikonbeschichtung auf der Seite hergestellt sind, die dafür gedacht ist, mit einer durch eine Silikonfolie gebildeten Dichtungsmembran (20) in Kontakt zu stehen.

3. Airbag nach Anspruch 1, **dadurch gekennzeichnet, dass** die Dichtungsmembran der Öffnung (4) dafür vorgesehen ist, zu brechen, wenn der Innendruck des Sackes (2) einen vorbestimmten Wert erreicht.

## Revendications

1. Airbag dont le sac gonflable (2) a une ouverture de décharge de gaz (4) et une zone de ventilation formée par un élément (10) fixé à la zone du sac gonflable (2) à côté de ladite ouverture (4), configuré de manière à permettre à la surface de sortie de gaz d'être variable pendant un impact dans un rapport directement proportionnel concernant la pression existant à l'intérieur du sac **caractérisé en ce que** l'élément (10) formant la zone de ventilation est formé par deux éléments en forme d'anneau (12, 14) avec des coupes radiales (16, 17) dans la zone destinée à couvrir partiellement l'ouverture (4) et une membrane d'étanchéité (20) de ladite ouverture (4) située entre eux.

2. Airbag selon la revendication 1, **caractérisé en ce que** lesdites parties (12, 14) sont en polyamide avec un revêtement épais en silicone sur la face destinée à être en contact avec la membrane d'étanchéité (20) formée par une feuille de silicone.

3. Airbag selon la revendication 1, **caractérisé en ce que** la membrane d'étanchéité de l'ouverture (4) est destinée à se rompre lorsque la pression intérieure du sac (2) atteint une grandeur prédéterminée.
